# EUROPEAN PATENT APPLICATION

(11) **EP 2 886 324 A1**
(43) Date of publication of application: **24.06.2015**
(21) Application number: 14193086.7
(22) Date of filing: 13.11.2014
(51) Int. Cl.: B32B 5/02, B32B 27/12, B32B 27/32, B32B 3/30, D06N 5/00, E04D 5/02

(54) **Alternating embossing for roofing membrane**

(30) Priority: 20.12.2013 US 201361919620 P; 31.07.2014 US 201414448935
(71) Applicant: Building Materials Investment Corporation, Dallas, TX 75212 (US)
(72) Inventor: Yang, Li-Ying, Whippany, New Jersey 07981 (US); Kiik Matti, Richardson, Texas 75082 (US); Ahrens, Keith A., Evansville, Indiana 47720 (US); Pierce, Helene Hardy, Andover, New Jersey 07821 (US); Broussard, William J., Port Arthur, Texas 77642 (US); Smith, Joseph, Orange, Texas 77632 (US)
(74) Representative: Beck, Simon Antony

(57) **Abstract**

The present disclosure relates, according to some embodiments, to single ply roofing membranes comprising a top layer, a scrim layer, and a bottom layer. A bottom layer may comprise a bottom layer surface having at least one non-embossed band and an embossing region comprising embossing. Embossing may extend from the bottom layer surface into the bottom layer and may comprise truncated pyramids or frustums with curvilinear bases.

## Description

### FIELD OF THE DISCLOSURE

The present disclosure relates to embossed or textured roofing membranes. Specifically, the present disclosure relates to roofing membranes with alternating sections of embossment operable for installment on a roof deck or roofing structure.

### BACKGROUND OF THE DISCLOSURE

Single ply membranes may be used as roofing membranes for covering flat and pitched roofs or roofing structures. Attachment of such membranes to underlying roof decks may be accomplished with adhesives and/or fastening mechanisms such as screws. Use of adhesives may be promoted by embossing or texturing a roofing membrane such that ridges and valleys are formed to receive or accept adhesives therein.

Embossing or texturing a membrane surface may reduce a contact surface of a membrane. A narrower heat seaming window may be observed on embossed membranes as compared to non-embossed membranes.

Roofing membranes may be provided or prepared in rolled form. Cleaning reagents may be used to wash an embossed surface of a membrane prior to heat sealing of two membranes to provide waterproofing. However, cleaning reagents may adhere to valleys and ridges of an embossed surface. Residual cleaning reagents may interfere with heat sealing used to secure a membrane onto a roofing structure.

### SUMMARY

Accordingly, a need has arisen for improved roofing membranes that may provide for improved heat seaming windows and may be treated with cleaning reagents during installation without significant reagent or chemical residue.

The present disclosure relates, according to some embodiments, to single ply roofing membranes comprising a top layer, a scrim layer, and a bottom layer. A bottom layer may comprise a bottom layer surface having at least one non-embossed band and an embossing region comprising embossing. Embossing may extend from the bottom layer surface into the bottom layer and may comprise truncated pyramids or frustums with curvilinear bases. Bases of embossing may comprise rectangle, hexagons, ellipses, or other appropriate curvilinear geometries.

Top layers and bottom layers of roofing membranes may comprise polyolefin materials. Polyolefin materials may be independently selected from the group consisting of polyethylene, polypropylene, terpolymers of ethylene, propylene and diene monomers, ethylene-propylene copolymers, ethylene-butane copolymers, ethylene-hexane copolymers, ethylene-octane copolymers, propylene-C4-8 alpha olefin copolymers, and metallocene polyolefins.

The at least one non-embossed band may comprise a first non-embossed band and a second non-embossed band disposed along opposing edges of the single ply roofing membrane and the embossing region positioned therebetween. In some embodiments, the bottom layer surface may further comprise a first embossed band between the first non-embossed band and the embossed region, a third non-embossed region positioned between the first embossed band and the embossed region, a second embossed band between the second non-embossed band and the embossed region; and a fourth non-embossed region positioned between the second embossed band and the embossed region. In some embodiments, the at least one non-embossed band may comprise an outer pair of non-embossed bands disposed along opposing edges of the single ply roofing membrane and an inner pair of non-embossed bands. The outer pair of non-embossed bands and the inner pair of non-embossed bands may be separated by a pair of embossing bands.

In some embodiments, the at least one non-embossed bands may independently have a width of about 3 inches to about 8 inches or roughly 7 cm to 20 cm. Each of an embossing bands independently may have a width of about 4 inches to about 8 inches or roughly 10 cm to 20 cm. A single ply roofing membrane has a width of about 4 feet to about 12 feet or roughly 1.2 m to 3.6 m. An embossing may have a depth of about 0.01 mm to about 3 mm. In some embodiments, an embossing may have a depth of about 0.02 mm to about 1 mm. A truncated pyramid embossing may have a depth of about 25% to about 75% of a corresponding untruncated pyramid. A membrane may have a substantially uniform thickness.

Methods of making single ply roofing membranes may comprise extruding and calendering a molten membrane; embossing a bottom layer of the membrane such that the bottom layer comprises at least one non-embossed band and at least one embossing region, wherein the embossing comprises truncated pyramids having curvilinear bases; and solidifying the molten membrane.

Methods of installing single ply roofing membranes may comprise providing the roofing membrane in a roll form; unrolling a desired length of said roofing membrane; and adhering the roofing membrane on a roof deck; wherein the roofing membrane comprises at least one non-embossed band and at least one embossing region adjacent to the non-embossed band; and wherein the embossing comprises truncated pyramids having curvilinear bases.

### BRIEF DESCRIPTION OF THE DRAWINGS

Some embodiments of the disclosure may be understood by referring, in part, to the present disclosure and the accompanying drawings, wherein:
FIGURE 1 illustrates a cross-sectional perspective view of a roofing membrane according to one embodiment of the disclosure;
FIGURE 2 illustrates a top perspective view of a roofing membrane according to one embodiment of the disclosure;
FIGURE 3A illustrates a close-up bottom perspective view of a roofing membrane according to one embodiment of the disclosure;
FIGURE 3B illustrates a close-up bottom perspective view of a roofing membrane according to another embodiment of the disclosure;
FIGURE 3C illustrates a close-up bottom perspective view of a roofing membrane according to another embodiment of the disclosure;
FIGURE 4A illustrates a bottom view of a roofing membrane according to one embodiment of the disclosure;
FIGURE 4B illustrates a bottom view of a roofing membrane according to another embodiment of the disclosure;
FIGURE 5A illustrates a perspective view of an embossing calendar roller according to one embodiment of the present disclosure;
FIGURE 5B illustrates a close-up section view of an embossing calendar roller according to one embodiment of the present disclosure; and
FIGURE 5C illustrates a close-up section view of an embossing calendar roller according to one embodiment of the present disclosure.

### DETAILED DESCRIPTION

The present disclosure relates, in some embodiments, to embossed or textured roofing membranes. Specifically, the present disclosure relates, in some embodiments, to roofing membranes with alternating sections of embossment operable for installment on a roof deck or roofing structure.

Some embodiments of the present disclosure provide for roofing membranes pressed, formed, or otherwise manufactured as single ply membranes. Single ply membranes may be suitable for covering industrial or commercial flat or pitched roofs. Single ply membranes may comprise a top layer, a scrim layer, a bottom layer. Layers of single ply membranes may be permanently pressed or bound together.

Top layers and bottom layers may comprise thermoplastic polyolefin (TPO) materials. Suitable polyolefin materials may include, but are not limited to polyethylene, polypropylene, terpolymers of ethylene, propylene and diene monomers, ethylene-propylene copolymers, ethylene-butane copolymers, ethylene-hexane copolymers, ethylene-octane copolymers, propylene-C4-8 alpha olefin copolymers, and metallocene polyolefins. Top layers and bottom layers may comprise materials independently selected from suitable polyolefins. Thus, top layers and bottom layers may comprise the same or different materials. Other suitable polyolefins or suitable materials may be used for top layers and/or bottom layers of roofing membranes without departing from the present disclosure.

Roofing membranes may comprise scrim layers disposed between top layers and bottom layers. Scrim layers disposed between top layers and bottom layers may reinforce structural integrity of roofing membranes. Materials for scrim layers may comprise woven and/or non-woven fabrics, and fiberglass and/or polyester. In some embodiments, a tenacity of a scrim layer may range from about 100 to about 3000 denier. Some scrim layers may have a tenacity ranging from about 500 to about 1500 denier. Some scrim layers may have a tenacity of about 1000 denier. Scrim layers may have a tensile strength of greater than about 14 KN per meter (80 pounds force per inch). Such characteristics of scrim layers may be varied as needed to suit particular roofing membrane designs. One of ordinary skill in the art would appreciate that such characteristics can be varied without departing from the present disclosure.

Bottom layers of roofing membranes of the present disclosure may carry or be subject to embossing. Embossing on a bottom layer may extend from a bottom layer surface into a bottom layer. Embossing may comprise series of ridges and valleys formed by rows or columns of particular geometries. Geometries of the embossing may comprise truncated pyramids or frustums having curvilinear bases. Curvilinear bases of the embossment may include rectangles, hexagons, circles, and/or ellipses. Other polygons or curvilinear designs may be used without departing from the present disclosure. For example, embossment with frustums having triangular bases, pentagonal bases, octagonal bases, or diamond-shaped bases are within the scope of the present disclosure. Other frustums or truncated pyramids may have bases with asymmetrical geometries or designs.

Other features of truncated pyramids or frustums may also be varied without departing from the present disclosure. For example, a height of a truncated pyramid or a frustum used for embossing of a roofing membrane may be varied to achieve a number of various design objectives. A greater height may advantageously provide for a more substantial thickness of a roofing membrane. Variations in dimensions of truncated pyramids or frustums for embossing may advantageously promote adhesive strength of roofing membranes without sacrificing wide heat seam window.

Depths and/or thicknesses of ridges and valleys formed through calendering or texturing may vary. Valleys may be formed by protrusions on a roller that may comprise frustums or truncated pyramids. Ridges may be formed by spacings between frustums or truncated pyramids on a roller. Once applied to a membrane for texturing or embossing, ridges formed may or may not have uniform width across a membrane. For example, some ridges may have a thin apex defining but a thin boundary between frustums or truncated pyramids. Some ridges may have a body defining a plateau boundary between frustums or truncated pyramids. In some embodiments, ridges may all have the same width. In other embodiments, ridges may have different widths. For example, ridges may comprise one thickness in one direction and another thickness in a different direction. Direction of ridges may be substantially orthogonal to one another. In some embodiments, ridges in one direction may have a greater thickness than ridges in an orthogonal direction. According to some embodiments, ridges may or may not be coplanar. For example, ridges in one direction may not be coplanar with ridges extending in an orthogonal direction.

Some embodiments of the present disclosure provide for roofing membranes with a bottom layer surface comprising alternating areas of embossing regions and non-embossed bands. For example, a bottom layer surface may comprise at least one non-embossed band. A non-embossed band may be disposed along an edge of the membrane. In some embodiments, a bottom layer surface may comprise two non-embossed bands, a first non-embossed band and a second non-embossed band. Two non-embossed bands may be disposed along opposed edges of the single ply roofing membrane. An embossing region may be disposed or positioned between two non-embossed bands disposed or positioned along opposing edges of the membrane.

Roofing membranes of the present disclosure may further comprise additional non-embossed bands. In some embodiments, two or more non-embossed bands may be disposed on a bottom layer surface, wherein each pair of non-embossed bands may be separated by an embossed band. Described differently, in some embodiments, a bottom layer surface may comprise an outer pair of non-embossed bands disposed along opposing edges of a roofing membrane, and an inner pair of non-embossed bands. An outer pair of non-embossed bands and an inner pair of non-embossed bands may be separated by a pair of embossing bands.

One of ordinary skill in the art having the benefit of the present disclosure would appreciate that use of non-embossed bands may be optional depending on a specific roofing membrane desired. In some embodiments, a bottom layer surface may comprise embossing of truncated pyramids or frustums across the surface and may lack non-embossed bands. In some embodiments, additional non-embossed bands may be added without parting from the present disclosures. For example, in some embodiments, a bottom layer surface may comprise six or seven non-embossed bands. Variation in the use of non-embossed bands or the number of non-embossed bands may be made to accomplish a number of design goals.

Roofing membranes of the present disclosure may have varying dimensions. In some embodiments, single ply roofing membranes may have a length of about 30 feet (roughly 9 metres) to about 200 feet (roughly 61 metres). Single ply roofing membranes may have a width of about 4 feet (1.2 metres) to about 12 feet (roughly 3.7 metres). In some embodiments, membranes may have a width of about 10 feet (roughly 3 metres). Variations in the width may provide for various advantages. For example, membranes with smaller widths may advantageously allow for greater ease in assembly of a roofing structure. Smaller widths may also advantageously allow for greater ease in rolling or packaging of a manufactured membrane. Larger widths may advantageously allow for greater structure integrity, fast installation and stability of a membrane or a roofing structure.

Non-embossed bands of a bottom layer surface may have a width of about 4 inches to about 8 inches. In some embodiments, non-embossed bands may have a width of about 6 inches. Where bottom layer surfaces comprise more than one non-embossed bands, non-embossed bands may be of the same or different widths.

In some membranes of the present disclosure, an embossing band may separate two non-embossed bands. An embossing band may have a width of about 4 inches to about 8 inches. In some embodiments, an embossing band may have a width of about 6 inches. Where bottom layer surfaces comprise more than one embossing bands, embossing bands may be of the same or different widths. Widths of embossing bands and non-embossing bands may be the same or different. For example, embossing bands and/or non-embossing bands having the same widths may advantageously allow for greater ease in manufacturing.

Depths of embossing according to the present disclosure may also be varied to achieve various structural benefits or advantages. Embossing may have a depth of about 0.01 mm to about 3 mm. In some embodiments, embossing may have a depth of about 0.02 mm to about 1 mm. Embossing of smaller depths may advantageously allow for use of less materials in manufacturing. Embossing of greater depths may advantageously provide for additional thickness. Other advantages of various depths of embossing may be apparent to one of ordinary skill in the art having the benefit of the present disclosure.

Roofing membranes of the present disclosure may comprise bottom layers with alternating regions of embossing regions, non-embossed bands, and/or embossed bands. The present disclosure advantageously provides for membranes that may have substantially uniform thickness. In some embodiments, a calendaring and texturing process may provide for an embossed region having a same thickness as a non-embossed band. Calendaring or texturing of one region of a bottom layer surface may result in protrusions or depressions of membrane material in another region. Calendaring or texturing may result in alternating regions of protrusions and depressions or ridges and valleys, and a uniform thickness across embossed regions and non-embossed bands may be achieved. Various other methods of achieving a substantially uniform thickness across a membrane may be used without departing from the present disclosure. A uniform thickness may advantageously improve membrane adhesion to roofing substrates for a fully adhered or secured roofing system.

### Adhesive Property of Embossed TPO per ASTM D413

### At 2"/min. pulling speed

**Table 1 For Solvent Based Adhesive**

| *Non-embossed TPO on plywood* | | | *Embossed TPO on plywood* | | |
|---|---|---|---|---|---|
| Aging Conditions | Avg. Adhesive Strength (pli) | Std. Dev. | Aging Days | Avg. Adhesive Strength (pli) | Std. Dev. |
| RT | **20.94** | **1.88** | **28** | **21.75** | **0.92** |
| 158°F dry | **12.02** | **0.674** | **28** | **24.86** | **0.89** |
| 140°F/95% RH | **10.24** | **0.11** | **14** | **20.31** | **11.05** |
| 0°F | **15.19** | **0.12** | **28** | **13.96** | **2.32** |

**Table 2 For Water Based Adhesive**

| *Non-embossed TPO on plywood* | | | *Embossed TPO on plywoood* | | |
|---|---|---|---|---|---|
| Aging Conditions | Avg. Adhesive Strength (pli) | Std. Dev. | Aging Days | Avg. Adhesive Strength (pli) | Std. Dev. |
| RT | **1.41** | **0.67** | **28** | **2.89** | **0.43** |
| 158°F dry | **4.43** | **0.50** | **28** | **4.36** | **0.87** |
| 140°F/95% RH | **3.25** | **2.35** | **14** | **3.95** | **0.55** |
| 0°F | **0.58** | **0.46** | **28** | **1.62** | **0.54** |

Performance of single ply roofing membranes may be measured by various experiments, tests, or other metrics. In some embodiments, single ply roofing membranes of the present disclosure may be tested through ASTM D413 using 180 degree peel at 2"/min Instron pulling speed. Adhesive performance of single ply roofing membranes according to embodiments of the present disclosure is illustrated in the above Table 1 and Table 2. Table 1 and 2 list the solvent and water based adhesive strength of single ply thermoplastic polyolefin (TPO) membranes with and without pyramid embossing on the back side of the membrane. In some experiments, an adhesive may be applied on both a plywood and a back surface of a TPO membrane. An application rate of 60SF/gallon (square feet per gallon) may be used for solvent based adhesives and an application rate of 120SF/gallon may be used for water based adhesive. A membrane adhered with plywood may then be conditioned at room temperature, 158°F dry oven, 140°F/95% humid oven and 0°F freezer up to 28 days to simulate various accelerated weathering environments. After aging, adhered membrane samples may be conditioned and tested at room temperature according to ASTM D413 for 180° adhesive peel strength between a TPO membrane and plywood. As seen in Table 1 and Table 2, peel test data shows an adhesive strength of an embossed TPO membrane may be equal or better than that of a non-embossed TPO membranes in both solvent and water based adhesive systems.

Embodiments of the present disclosure may provide for various benefits and advantages. For example, embossed regions and embossed bands may provide for ridges and valleys that are operable to or configured to accept adhesives therein. As another example, embodiments with alternating embossing and non-embossed bands or regions may advantageously provide for similar or comparable heat seaming windows and/or heat seaming performance.

Embodiments of the present disclosure may provide for improved heat sealing ability of single ply thermoplastic roofing membranes over traditional asphalt buildup roofs, modified bitumen roofs, as well as single ply thermoset EPDM roofs. Improved heat sealing may advantageously keep a roofing structure watertight and prevent or mitigate related water damage. Contaminated or aged roofs require cleaning of roof membrane prior to heat seam operations. Providing for bottom layers embossed with truncated pyramids or frustums may advantageously provide for a different contact surface or surface area on a bottom layer surface of a roofing membrane. Truncated pyramids or frustums may comprise a plane in the place of a pyramid apex. Such plane on a roller, when pressed or calendared on a bottom layer surface may result in a corresponding plane in a depression of an embossed unit or embossing pattern unit. One of ordinary skill in the art would appreciate that such texturing may provide a flat region within a depression on a bottom layer surface. A flat region may advantageously allow for cleaning reagents to be exposed thereon without leaving chemical residue that may interfere with heat seaming.

**Table 3**

| **Heat Seam Performance Evaluation ofSingle Ply Embossed TPO Membrane with Membrane Cleaner** | | | |
|---|---|---|---|
| Embossing Pattern | Membrane Cleaner | Cleaner Flash Off Time | Heat Seal Rating |
| Pyramid | No | NA | 100% |
| Pyramid | Yes | 10 minutes | 80% |
| Truncated Pyramid | Yes | 10 minutes | 100% |

Table 3 shows that truncated pyramid embossing patterns may improve a heat sealing rating of a TPO membrane over a pyramid embossing pattern when a membrane is cleaned with a roof membrane cleaner. One of ordinary skill in the art would appreciate that a "heat seal rating" may be based on or determined from a seam area separation quality when machine peeling the seamed membrane. Testing of a heat seal rating may be performed at an automatic heat welder condition of 1148F and 12FPM, and welding a membrane over an isocyanuate insulation board.

As shown in Table 3, when a roof membrane cleaner is applied to an embossed TPO surface prior to the heat sealing process, a pyramid embossed TPO may achieve a 80% heat seal rating. In some embodiments, a 50% embossing depth reduction may be achieved by adjusting depth from 0.15 mm to 0.075 mm. A truncated tip pyramid membrane may improve roof membrane cleaner evaporation prior to the heat seaming process and may achieve up to a 100% heat seal rating. The heat seal rating may be based on seam area separation quality when machine peeling a seamed or sealed membrane. A 100% heat seal rating may mean that 100% of the seam area may be separated between top and bottom TPO layers within one single ply membrane of the two heat seamed membranes. Furthermore, in a 100% heat seal rating, an interface of two membranes may be perfectly heat sealed without separation.

As yet another example, embodiments of the present disclosure providing for alternating regions of embossing formed from truncated pyramids or frustums may advantageously allow for consumption or use of less raw materials while still preserving a desired thickness of a roofing membrane.

The aforementioned benefits and advantages are given by way of example only. One of ordinary skill in the art would appreciate that other benefits and advantages may be achieved without departing from the description herein.

According to another aspect of the present disclosure, methods of making roofing membranes are provided for. More specifically, methods of making single ply roofing membranes of the aforementioned disclosures is provided for. Methods may comprise extruding and calendaring a molten membrane. Extruding and calendaring a molten membrane may facilitate a texturing or embossing of a membrane surface.

Methods may further comprise embossing a bottom layer of a membrane such that a bottom layer comprises at least one embossing region. Embossing a bottom layer may comprise forming truncated pyramids or frustums having curvilinear bases upon a bottom layer. Methods may further comprise solidifying a molten membrane.

In some embodiments, a TPO line or some other suitable manufacturing line may utilize a calendar roll which may press molten TPO membrane layers together to form a single ply membrane. For example, a calendar roll may press a top layer, a scrim layer, and a bottom layer to form an aforementioned single ply roofing membrane. For texture or for embossing, a calendar roll may be engraved with a pattern thereon. Post texturing or embossing may be achieved with a single ply roofing membrane via additional heat process.

In some embodiments, extrusion of a molten TPO membrane layer may be substantially simultaneous (*e.g*., simultaneous, in immediate succession) with an embossing process occurring downstream of the extrusion. Described differently, TPO membrane material may be extruded in a molten state. An already extruded section of the TPO membrane may undergo texturing and/or embossing with a calendar roller while subsequent sections may be extruded.

According to another aspect of the present disclosure, methods of installing single ply roofing membranes on roof decks are provided for. Methods may comprise providing a roofing membrane in a roll form, unrolling a desired length of a roofing membrane, and adhering a roofing membrane on a roof deck or roofing structure.

A roofing membrane used in the present methods of installation may comprise a top layer, a scrim layer, and a bottom layer in a single ply membrane. A bottom layer may comprise at least one non-embossed band and at least one embossing region adjacent to the non-embossed band. Embossing on a bottom layer may comprise truncated pyramids or frustums having curvilinear bases.

Roofing membranes of the present disclosure may be used with appropriate adhesives. Adhesives may be painted or sprayed on an unfolded membrane prior to installation. Alternatively, roofing membranes may also be mechanically attached or secured. During the roof installation, when one membrane is connected with the second membrane, the two membrane edges are overlapped for 3" to 6" width. The heat seaming is conducted in the overlapped membranes to keep watertight.

### Specific Example Embodiments

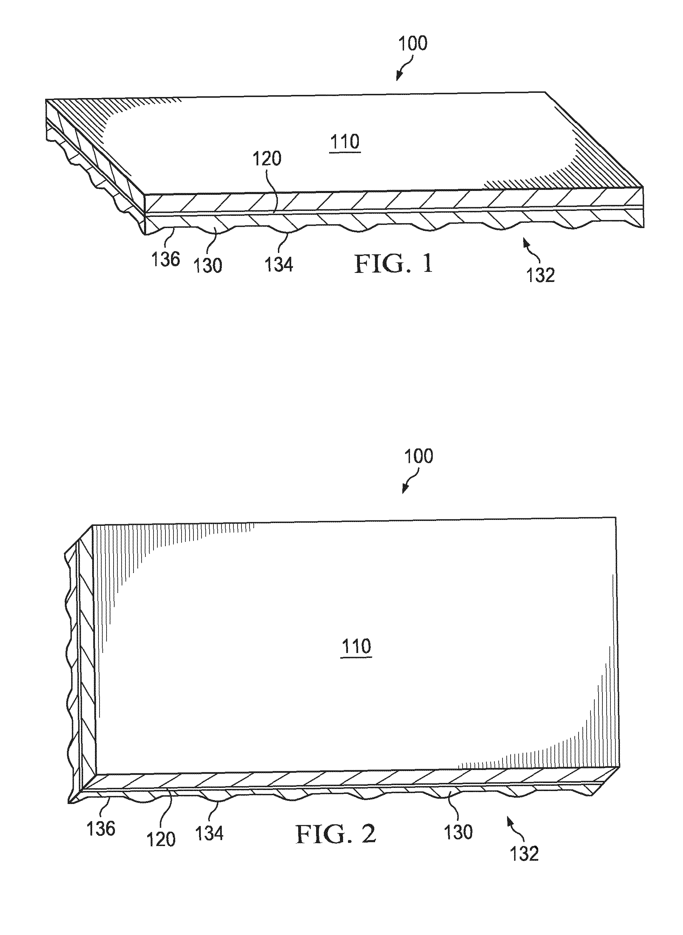

Specific example embodiments of single ply roofing membranes are illustrated in FIGURES 1-4B. In **FIGURE 1****,** a cross-sectional perspective view of a single ply roofing membrane according to an embodiment of the present disclosure is shown. In **FIGURE 2****,** a top perspective view of a roofing membrane according to one embodiment of the disclosure. As shown in FIG. 1 and FIG. 2, single ply roofing membrane 100 may comprise top layer 110, scrim layer 120, and bottom layer 130. Bottom layer 130 may comprise bottom layer surface 132, wherein bottom layer surface 132 may comprise embossing. Embossing may form ridges 134 and valleys 136 upon bottom layer surface 132. Ridges 134 and valleys 136 may be alternating and continuous along an area of bottom layer surface 132. Ridges 134 and valleys 136 forming embossing may extend from bottom layer surface 132 into bottom layer 130. For example, valleys 136 may be closer to scrim layer 120 than ridges 134.

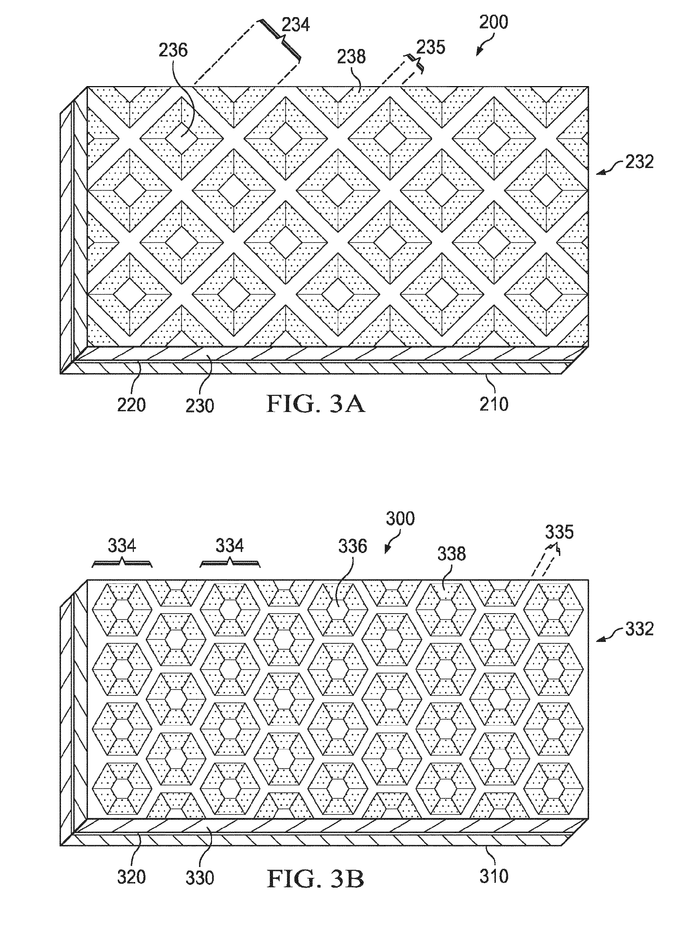

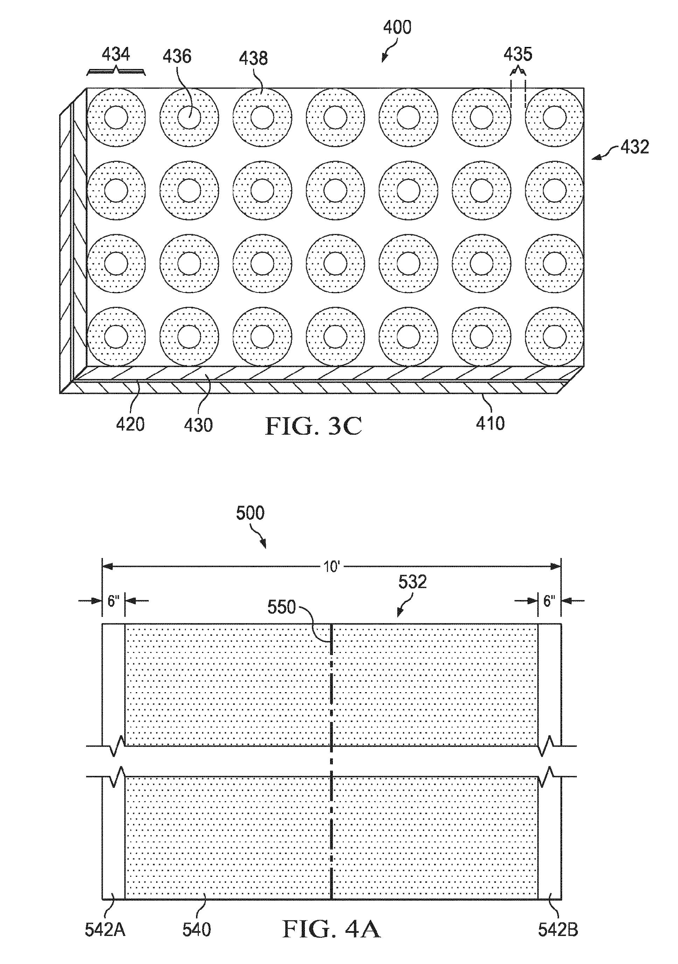

Referring now to **FIGURE 3A, FIGURE 3B****,** and **FIGURE 3C****,** close-up bottom perspective views of roofing membranes 200, 300, and 400 according to various embodiments of the present disclosure are shown. As shown in FIG. 3A, FIG. 3B, and FIG. 3C, roofing membranes 200, 300, and 400 may comprise top layer 210, 310, and 410 scrim layer 220, 320, and 420 and bottom layer 230, 330, and 430. Embodiments of FIG. 3A, FIG. 3B, and FIG. 3C may differ in that bottom layers 230, 330, and 430 may comprise bottom layer surfaces 232, 332, and 432 with different embossing or embossing designs. Embossing may be formed from various geometries, such as truncated pyramids or frustums having curvilinear bases.

For example, in FIG. 3A, bottom layer surface 232 may comprise embossing formed from rollers having truncated pyramids with rectangular bases. As seen in FIG. 3A, embossed unit 234 may comprise a rectangular shape or geometry as formed from an embossing roller having frustums of rectangular bases. Serial arrangement of embossed unit 234 in columns and/or rows along bottom layer surface 232 may result in ridges and valleys (as seen in FIG. 1 and FIG. 2) Embossed unit 234 on bottom layer surface 232 of membrane 200 may comprise lower plane 236 and slope 238. Lower plane 236 may have particular geometries, such as a square or rectangle as shown in FIG. 3A. Slope 236 may comprise a plurality of sides, such as four sides as shown in FIG. 3A.

In FIG. 3B, a bottom layer surface 332 of membrane 300 comprises a plurality of embossing units 334. Embossed unit 334 may comprise a hexagonal shape or geometry as formed from an embossing roller having frustums of hexagonal bases. Embossing units 334 may comprise lower plane 336 and slope 338. As shown in FIG. 3B, lower plane 336 may comprise a hexagonal geometry and slope 238 may comprise six sides.

In FIG. 3C, a bottom layer surface 432 of membrane 400 comprises a plurality of embossing units 434. Embossed unit 434 may comprise a frustoconical shape or geometry as formed from an embossing roller having frustums of circular or elliptical bases. Embossing units 434 may comprise lower plane 436 and slope 438. As shown in FIG. 3C, lower plane 436 may comprise a circular or elliptical geometry and slope 434 may comprise one side or a cone like geometry.

As seen in FIG. 3A, 3B, and 3C, bottom layer surfaces 232, 332, and 432 may comprise series of embossed units 234, 334, and 434 dispersed thereon. In some embodiments, embossed units 234, 334, and 434 may be spaced apart from one another by spacings 235, 335, and 435. Spacings 235, 335, and 435 may form ridges on bottom layer surface 232, 332, and 432. As seen in FIG. 3A, 3B, and 3C, spacings 235, 335, and 435 may be consistent across bottom layer surfaces 232, 332, and 432. Described differently, embossed units 234, 334, and 434 may be spread out evenly or may be equidistant from one other. In some embodiments, spacings 235, 335, and 435 may not be consistent across bottom layer surfaces 232, 332, and 432 and distances between embossed units 234, 334, and 434 may vary across bottom layer surfaces 232, 332, and 432.

Dimensions of embossed units 234, 334, and 434 and spacings 235, 335, and 435 shown in FIG. 3A, 3B, and 3C are not to scale and are not intended to illustrate proportions thereof. One of ordinary skill in the art would appreciate that spacings 235, 335, and 435 may be wider or narrower as needed to achieve particular embossing designs. Similarly, dimensions of embossed units 234, 334, and 434 may be varied independently of dimensions of spacings 235, 335, and 435.

Rollers with frustum designs or truncated pyramid designs effectively have apexes of the pyramids removed. Thus, a truncated plane of a frustum design or a truncated pyramid design may have a flatter and wider surface area than a point or apex of a full pyramid. Thus, use of rollers with frustum designs or truncated pyramid designs may result in lower planes 236, 336, and 436 in embossed units 234, 334, and 434 having flatter and wider surface areas. In some embodiments, a pyramid embossed unit 234 has about 9 to about 11% surface area increase over non-embossed surface area. Truncated embossed units with 50% embossing depth truncation and lower plane 236 may have about 7 to about 8% surface area increase over non-embossed surface areas.

One of ordinary skill in the art would appreciate that variations may be made to designs of frustum depressions on bottom layer surfaces 232, 332, and 432 without departing from the present disclosure. For example, slopes 234, 334, and 434 may have fewer or more sides. Lower planes 236, 336, and 436 may have greater or smaller surface areas than depicted in FIG. 3A, FIG. 3B, and FIG. 3C, respectively. Lower planes 236, 336, and 436 may comprise any curvilinear or appropriate shape, and such shape may or may not be the same as a base of a frustum design of a corresponding roller. Embossed units 234, 334, and 434 may be spaced further apart or closer together, and may be arranged in columns and rows or randomly dispersed. Other variations may be made without departing from the present disclosure.

Referring now to **FIGURE 4A****,** a bottom view of a roofing membrane according to one embodiment of the disclosure is shown. Bottom layer surface 532 of roofing membrane 500 may comprise at least one non-embossed band 542A, 542B. As shown in FIG. 4A, roofing membrane 500 may comprise first non-embossed band 542A and second non-embossed band 542B disposed along opposing edges of membrane 500. Embossing region 540 may be disposed or positioned between first non-embossed band 542A and second non-embossed band 542B. Membrane 500 may have a width of about 5 to about 10 feet. Non-embossed bands 542A, 542B disposed along opposing edges may each be about 6 inches wide.

In some embodiments, membrane 500 may comprise folding line 550. Membrane 500 may be cut or slit along folding line 550 to result in two smaller membrane sections. For example, membrane 500 having a width of 10 feet may be divided at folding line 550 to form two smaller 5 feet wide sections. Each of the smaller 5 feet wide sections may comprise one non-embossed band 542A or 542B. In some embodiments, folding line 550 may be a physically indented or perforated line. Such feature may advantageously allow membrane 500 to be more easily separated or divided along folding line 550. In some embodiments, folding line 550 may be a positional indicator and may not have physical characteristics distinct from the rest of the embossing region 540 on the bottom layer surface 532.

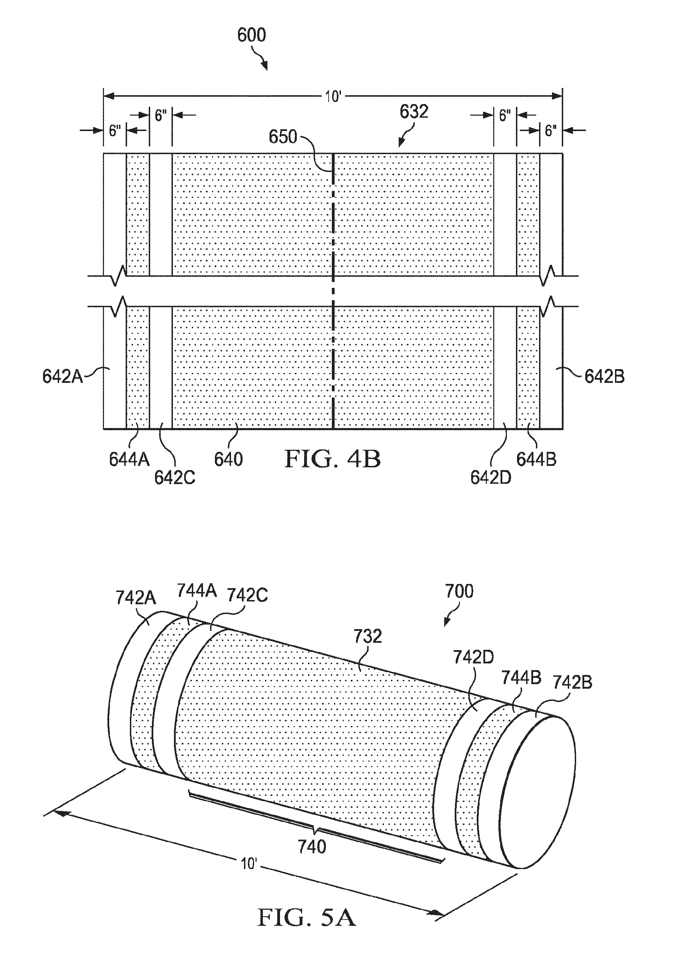

Additional non-embossing bands may be used. For example, in **FIGURE 4B****,** roofing membrane 600 comprises four non-embossed bands 642A, 642B, 642C, and 642D. Outer pair of non-embossed bands 642A, 642B may be disposed along opposing edge of membrane 600. Inner pair of non-embossed bands 642C, 642D may be disposed on membrane 600 and separate from outer pair of non-embossed bands 642A, 642B by embossing bands 644A, 644B. As seen in FIG. 4B, embossing band 644A separates non-embossed band 642A and non-embossed band 642C; embossing band 644B separates non-embossed band 642B and non-embossed band 642D. In FIG. 4B, non-embossed bands 642A, 642B, 642C, and 642D and embossing bands 644A, 644B may each be 6 inches wide. Widths of non-embossed bands and embossing bands may be varied for different functional or design purposes. Widths of non-embossed bands and embossing bands may or may not be the same as each other. Each non-embossed band and each embossing band may have an individual width. Additional non-embossed bands may also be introduced onto bottom surface layer 632 of membrane 600 without departing from the present disclosure.

As shown in FIG. 4B, embodiments comprising additional non-embossing bands may also comprise folding line 650. As previously described, folding line 650 may facilitate dividing of membrane 600 into smaller sections. As shown in FIG. 4B, membrane 600 divided along folding line 650 may result in two sections, wherein each of two sections comprises two non-embossing bands 642A and 642C, or 642B and 642D.

Embodiments of the present disclosure providing for alternating positioning of embossed regions and non-embossed bands may advantageously allow for greater flexibility in optimizing or otherwise designing material distribution across a bottom layer of a membrane. Such optimization or design flexibility may allow for reduction in material use for the production or manufacturing of a desired membrane. Such optimization or design flexibility may also be achieved without comprising a welding of seams or a heat welding performance of a membrane. Embossed TPO comprising non embossed bands may provide the identical wide welding window and heat seam performance as conventional smooth or non embossed TPO, and have the advantage of antiblocking and improved adhesive adhesion strength and material saving.

Referring now to **FIGURE 5A****,** a perspective view of an embossing roller 700 according to one embodiment of the disclosure is shown. As shown, embossing roller 700 may comprise texture surface 732. Texture surface 732 may be operable to press upon a molten TPO membrane layer to form embossing pattern thereon. Embossing roller 700 of FIG. 5A may advantageously comprise a cylindrical structure or geometry. A cylindrical structure or geometry may allow embossing roller 700 to be rolled across a molten TPO membrane to form a sheet of roofing membrane.

As shown, embossing roller 700 may comprise non-textured bands 742A, 742B, 742C, and 742D. Some non-textured bands may be separated by textured band 744A, 744B or textured region 740. Non-textured bands 742A, 742B, 742C, and 742D may be operable to result in non-embossed bands (642A, 642B, 642C, and 642D, as seen in FIG. 4B) on a roofing membrane surface.

In some embodiments, embossing roller 700 may have a width of about 10 feet. Embossing roller 700 may be used on a variety of molten TPO membranes comprising different widths to achieve different effects or alternating embossing bands and/or regions. For example, if 10 feet wide embossing roller 700 is centered about a 10 feet wide molten TPO membrane, the result of an embossing process may be a 10 feet wide TPO membrane comprising four non-embossed bands corresponding to non-textured bands 742A, 742B, 742C, and 742D. In some embodiments, 10 feet wide embossing roller 700 may be centered about an 8 wide molten TPO membrane. The width of the molten TPO membrane may not extend to non-textured bands 742A and 742B. Thus, the result of an embossing process may be an 8 feet wide TPO membrane comprising two non-embossed bands corresponding to non-textured bands 742C and 742D. As yet another example, 10 feet wide embossing roller 700 may be centered about a 6 wide molten TPO membrane. The width of the molten TPO membrane may not extend to non-textured bands 742A, 742B, 742C, and 742D. Thus, the result of an embossing process may be a 6 feet wide TPO membrane with no non-embossed bands. Thus, embossing roller 700 of a particular width may be applied to or used on molten TPO membranes of differing widths.

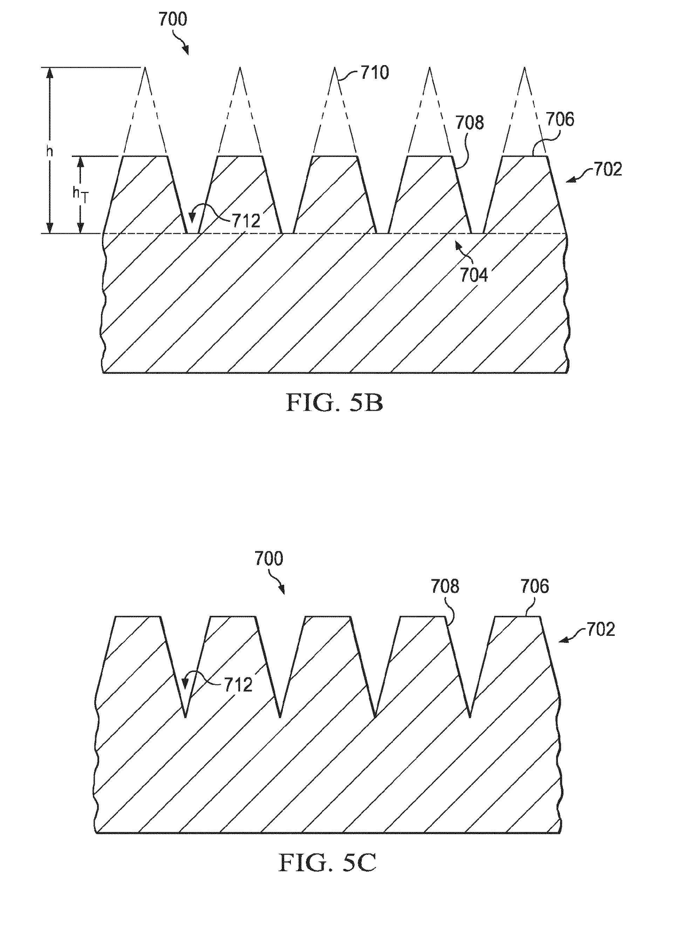

Referring to **FIGURE 5B****,** a close-up section view of embossing calendar roller 700 according to one embodiment of the present disclosure is illustrated. As seen in FIG. 5B, embossing calendar roller 700 may comprise a series of embossing features 702. Embossing features 702 may comprise geometric protrusions operable to be pressed upon a membrane layer to form corresponding depressions or recesses thereon. Embossing features 702 may comprise base plane 704, frustum plane 706, and side plane 708. Embossing features may be separated by spacings 712. Applied to a membrane, base plane 704 may define a geometric shape for an embossing unit (as seen in features 234, 334, 434 of FIG. 3A, FIG. 3B, and FIG. 3C, respectively). Base plane 704 may comprise any curvilinear or appropriate geometry such as a rectangle, hexagon, circle, or ellipse. Applied to a membrane, frustum plane 706 may define a surface area of a lower plane of an embossing unit (as seen in features 236, 336, 436 of FIG. 3A, FIG. 3B, and FIG. 3C, respectively). Frustum plane 706 may comprise any curvilinear or appropriate geometry such as a rectangle, hexagon, circle, or ellipse. Frustum plane 706 may or may not have the same geometry as base plane 704. Applied to a membrane, side plane 708 may define or correspond to a slope for an embossing unit (as seen in features 238, 338, 438 of FIG. 3A, FIG. 3B, and FIG. 3C, respectively). Side plane 708 may comprise a plurality of planes which may correspond with a number of sides of a geometry of either base plane 704, frustum plane 706, or both. Various dimensions of base plane 704, frustum plane 706, and side plane 708 may be varied without departing from the present disclosure.

As shown in FIG. 5B, embossing feature 702 may comprise a frustum or truncated pyramid. Frustums or truncated pyramids may comprise pyramids with an apex 710 truncated or otherwise removed. In FIG. 5B, truncated regions or removed apexes 710 are indicated by dashed lines. As shown, frustums or truncated pyramids decrease a volume associate within the apex 710. Frustums and truncated pyramids may advantageously provide frustum plane 706 where apex 710 has been removed or truncated.

Frustums or truncated pyramids may have a truncated height *h_{T},* wherein *h_{T}* may be less than a height of a full pyramid. In some embodiments, *h_{T}* may be about 25% to about 75% of a height *h* of a corresponding untruncated pyramid. A reduced height *h_{T}* of the embossing feature 702 may result in a reduced depth in an embossing of a roofing membrane of the present disclosure. In some embodiments, an embossed roofing membrane may comprise embossment with depths of *h_{T}*, corresponding with a height of embossing feature 702. Depth of embossment may be about 25% to 75% the depth of an embossment form from corresponding untruncated pyramids or untruncated embossing features 702.

Referring to **FIGURE 5C****,** a close-up section view of embossing calendar roller 700 according to one embodiment of the present disclosure is illustrated. As shown, designs of spacings 712 between embossing features 702 may vary. In FIG. 5B, spacings 712 may comprise flat surfaces or flat regions. In FIG. 5C, spacings 712 may comprise angled surfaces or cervices formed by the joining of side planes 708 of different embossing features 702. Use of embossing calendar rollers 700 with different spacing 712 designs may advantageously allow for formation of different embossing patterns on a roofing membrane. Spacings 712 on embossing calendar roller 700 may correspond to or may form corresponding ridges on a roofing membrane. Spacings 712 in FIG. 5B may result in ridges with flat surfaces that may correspond with flat surfaces of spacings 712. Spacings 712 of FIG. 5C may result in ridges with sharp features that may correspond with the crevices of spacings 712. One of ordinary skill in the art would appreciate that ridges formed on a TPO membrane from the features of spacings 712 may depend on how deep embossing calendar roller 700 is pressed on or into a molten TPO membrane.

As will be understood by those skilled in the art who have the benefit of the instant disclosure, other equivalent or alternative compositions, systems, methods of use, and method of manufacturing for single ply roofing membranes can be envisioned without departing from the description contained herein. Accordingly, the manner of carrying out the disclosure as shown and described is to be construed as illustrative only.

Persons skilled in the art may make various changes in the shape, size, number, and/or arrangement of parts without departing from the scope of the instant disclosure. For example, the position and number of non-embossed bands may be varied. In some embodiments, sizes and designs of embossing may be interchangeable. Interchageability may allow embossing to be custom adjusted. Each disclosed method and method step may be performed in association with any other disclosed method or method step and in any order according to some embodiments. Where the verb "may" appears, it is intended to convey an optional and/or permissive condition, but its use is not intended to suggest any lack of operability unless otherwise indicated. Persons skilled in the art may make various changes in methods of preparing and using a composition, device, and/or system of the disclosure.

Also, where ranges have been provided, the disclosed endpoints may be treated as exact and/or approximations as desired or demanded by the particular embodiment. Where the endpoints are approximate, the degree of flexibility may vary in proportion to the order of magnitude of the range. For example, on one hand, a range endpoint of about 50 in the context of a range of about 5 to about 50 may include 50.5, but not 52.5 or 55 and, on the other hand, a range endpoint of about 50 in the context of a range of about 0.5 to about 50 may include 55, but not 60 or 75. In addition, it may be desirable, in some embodiments, to mix and match range endpoints. Also, in some embodiments, each figure disclosed (e.g., in one or more of the examples, tables, and/or drawings) may form the basis of a range (e.g., depicted value +/- about 10%, depicted value +/- about 50%, depicted value +/- about 100%) and/or a range endpoint. With respect to the former, a value of 50 depicted in an example, table, and/or drawing may form the basis of a range of, for example, about 45 to about 55, about 25 to about 100, and/or about 0 to about 100.

All or a portion of a device and/or system for single ply roofing membrane may be configured and arranged to be disposable, serviceable, interchangeable, and/or replaceable. These equivalents and alternatives along with obvious changes and modifications are intended to be included within the scope of the present disclosure. Accordingly, the foregoing disclosure is intended to be illustrative, but not limiting, of the scope of the disclosure as illustrated by the appended claims.

The title, abstract, background, and headings are provided in compliance with regulations and/or for the convenience of the reader. They include no admissions as to the scope and content of prior art and no limitations applicable to all disclosed embodiments.

## Claims

1. A single ply roofing membrane (100) comprising in a single ply membrane:
a top layer (110), a scrim layer (120), and a bottom layer (130), the bottom layer comprising a bottom layer surface (132) having at least one non-embossed band (452A, 452B) and an embossing region (540) comprising embossing,
wherein the embossing
extends from the bottom layer surface into the bottom layer and
comprises truncated pyramids having curvilinear bases.

2. The single ply roofing membrane of claim 1, wherein the top layer and the bottom layer comprise polyolefin materials.

3. The single ply roofing membrane of claim 2, wherein the polyolefin materials are independently selected from the group consisting of polyethylene, polypropylene, terpolymers of ethylene, propylene and diene monomers, ethylene-propylene copolymers, ethylene-butane copolymers, ethylene-hexane copolymers, ethylene-octane copolymers, propylene-C4-8 alpha olefin copolymers, and metallocene polyolefins.

4. The single ply roofing membrane of any preceding claim, wherein the bases comprise rectangles, hexagons, ellipses or circles.

5. The single ply roofing membrane of any preceding claim, wherein the at least one non-embossed band comprises a first non-embossed band and a second non-embossed band disposed along opposing edges of the single ply roofing membrane and the embossing region positioned therebetween.

6. The single ply roofing membrane of claim 5, wherein the bottom layer surface further comprises:
a first embossed band between the first non-embossed band and the embossed region;
a third non-embossed region positioned between the first embossed band and the embossed region;
a second embossed band between the second non-embossed band and the embossed region; and
a fourth non-embossed region positioned between the second embossed band and the embossed region.

7. The single ply roofing membrane of claim 1, 2, 3 or 4 wherein the at least one non-embossed band comprises an outer pair of non-embossed bands disposed along opposing edges of the single ply roofing membrane and an inner pair of non-embossed bands; and wherein the outer pair of non-embossed bands and the inner pair of non-embossed bands are separated by a pair of embossing bands.

8. The single ply roofing membrane of any preceding claim, wherein at least one of the following apply:
a) each of the at least one non-embossed bands independently has a width of about 3 inches to about 8 inches;
b) the single ply roofing membrane has a width of about 4 feet to about 12 feet;
c) the membrane has a substantially uniform thickness.

9. The single ply roofing membrane of any preceding claim, wherein the embossing has a depth of about 0.01 mm to about 3 mm.

10. The single ply roofing membrane of any preceding claim, wherein a depth of the embossing is about 25% to about 75% of a corresponding untruncated pyramid.

11. A method of making a single ply roofing membrane, the method comprising:
extruding and calendering a molten membrane;
embossing a bottom layer of the membrane such that the bottom layer comprises at least one non-embossed band and at least one embossing region, wherein the embossing comprises truncated pyramids having curvilinear bases; and
solidifying the molten membrane.

12. The method of claim 11, wherein the bottom layer comprises polyolefin materials selected from the group consisting of polyethylene, polypropylene, terpolymers of ethylene, propylene and diene monomers, ethylene-propylene copolymers, ethylene-butane copolymers, ethylene-hexane copolymers, ethylene-octane copolymers, propylene-C4-8 alpha olefin copolymers, and metallocene polyolefins.

13. The method of claim 11 or 12, wherein at least one of the following apply:
a) the bases comprise rectangles;
b) the bases comprise hexagons;
c) the bases comprise ellipses;
d) the bottom layer comprises two non-embossed bands disposed along opposing edges of the single ply roofing membrane;
e) the thickness of the membrane is substantially uniform.

14. The method of claim 11, 12 or 13, wherein the bottom layer comprises two pairs of non-embossed bands disposed along opposing edges of the single ply roofing membrane; and wherein each pair of non-embossed bands comprises two non-embossed bands disposed apart between an embossing band; or wherein the bottom layer comprises an outer pair of non-embossed bands disposed along opposing edges of the single ply roofing membrane and an inner pair of non-embossed bands; and wherein the outer pair of non-embossed bands and the inner pair of non-embossed bands are separated by a pair of embossing bands.

15. A method of installing a single ply roofing membrane on a roof deck comprising the steps of:
providing the roofing membrane in a roll form;
unrolling a desired length of said roofing membrane; and
adhering the roofing membrane on a roof deck;
wherein the roofing membrane comprises a membrane as claimed in any of claims 1 to 10.
